# EUROPEAN PATENT SPECIFICATION

(11) **EP 1 997 943 B1**
(45) Date of publication and mention of the grant of the patent: **06.04.2011**
(21) Application number: 08003264.2
(22) Date of filing: 22.02.2008
(51) Int. Cl.: D04H 1/42, D04H 1/58, B01J 35/04, C04B 35/80, D04H 1/54, B01D 39/20, B32B 3/12

(54) **Honeycomb structured body and method for manufacturing the same**
Körper mit Wabenstruktur und zugehöriges Herstellungsverfahren
Corps structuré en nid d'abeilles et son procédé de fabrication

(30) Priority: 25.05.2007 WO PCT/JP2007/060734
(43) Date of publication of application: 03.12.2008
(73) Proprietor: IBIDEN CO., LTD., Ogaki-shi Gifu 503-8604 (JP)
(72) Inventor: Ogyu, Kazutake, c/o Ibiden Co., Ltd., Ibi-gun, Gifu 501-0695 (JP); Kondo, Yusuke, c/o Ibiden Co., Ltd., Ibi-gun, Gifu 501-0695 (JP)
(74) Representative: HOFFMANN EITLE

(56) References cited:
- EP-A- 1 726 698

## Description

### TECHNICAL FIELD

The present invention relates to a honeycomb structured body and a method for manufacturing the same.

### BACKGROUND ART

Recently, particulates (hereinafter, also referred to as PMs), which are contained in exhaust gases discharged from internal combustion engines of vehicles, such as buses and trucks, and construction machines and the like, have raised serious problems as those particulates are harmful to the environment and the human body. Various kinds of filters have been proposed as filters for capturing PMs contained in exhaust gases and thereby purifying the exhaust gases by passing the exhaust gases through a porous material.

As the filters for capturing PMs contained in exhaust gases and thereby purifying exhaust gases, for example, there have been proposed various kinds of filters with use of a lamination-type honeycomb structured body manufactured by laminating lamination members having through holes (for example, Patent Document 1).

This honeycomb structured body is a laminated body formed by laminating sheet-shaped lamination members each comprising inorganic fibers and an inorganic matter. The lamination members are laminated in such a manner that through holes are superimposed on one another in the longitudinal direction, and cells are formed by the superimposed through holes. In addition, lamination members for an end portion are laminated in the end portions so that through holes are sealed in a checkered pattern. Thereby, PMs in exhaust gases are captured by a cell wall separating each of the cells when the exhaust gases containing PMs pass from one cell to another cell, leading to purification of the exhaust gases.

Since lamination members are formed by firmly fixing inorganic fibers by interposing an inorganic matter in the honeycomb structured body described in Patent Document 1, the lamination members become less vulnerable to wind erosion, simultaneously with the added strength of the lamination members.

Patent Document 1: WO2006/092986 A1

### DISCLOSURE OF THE INVENTION PROBLEMS TO BE SOLVED BY THE INVENTION

Although inorganic fibers firmly fixed by interposing an inorganic matter cause increase in rigidity and the resultant increase in mechanical properties such as tensile strength in the honeycomb structured body described in Patent Document 1, but on the contrary, the toughness of the honeycomb structured body, which is said to alleviate a thermal stress, is not as high as expected. Consequently, there remains room for improvement in the properties as the entire honeycomb structured body in use.

The present invention has been made in view of the problem, and its object is to provide a honeycomb structured body improved in thermal shock resistance by achieving a good balance between rigidity and toughness.

In order to accomplish the object, the honeycomb structured body according to claim 1 refers to a honeycomb structured body having a pillar shape in which a plurality of cells disposed in parallel with one another in a longitudinal direction with a cell wall therebetween, comprising: an inorganic fiber; and an inorganic matter, the inorganic matter forming a fixed portion in which the inorganic fibers are firmly fixed to one another, part of the fixed portion having a fissure.

In accordance with a method for manufacturing a honeycomb structured body according to claim 1, a method for manufacturing a honeycomb structured body comprises: preparing a mixture containing an inorganic fiber and a raw material of an inorganic matter having a melting point less than a melting point of the inorganic fiber; molding the mixture to manufacture a pillar-shaped honeycomb molded body in which a plurality of cells are disposed in parallel with one another in a longitudinal direction with a cell wall therebetween; heating the honeycomb molded body at a temperature less than the melting point of the inorganic fiber and not less than the melting point of the raw material of the inorganic matter; cooling the heated honeycomb molded body to manufacture a honeycomb structured body comprising a honeycomb member, wherein a fissure is introduced into a fixed portion in the honeycomb member by setting to 50 to 500°C/hr an average rate of change of the temperature drop to a normal temperature, the fixed portion being formed by firmly fixing the inorganic fibers to one another by interposing the inorganic matter in the honeycomb member, the fissure having a size of several micrometers to hundreds of micrometers.

In accordance with the method for manufacturing the honeycomb structured body according to claim 1, a fissure can be easily introduced into some fixed portions by generating an appropriate thermal stress in the process of forming a fixed portion.

In accordance with the method for manufacturing the honeycomb structured body according to claim 2, since the inorganic matter contains silica, it is possible to manufacture a honeycomb structured body excellent in heat resistance.

In accordance with the method for manufacturing the honeycomb structured body according to claim 3, since the inorganic fiber is at least one selected from the group consisting of a silicon carbide fiber, an alumina fiber, a basalt fiber, a silica fiber, a silica-alumina fiber, a titania fiber, and a zirconia fiber, it is possible to manufacture a honeycomb structured body excellent in heat resistance.

In accordance with the method for manufacturing the honeycomb structured body according to claim 4, since it is possible to continuously manufacture a honeycomb molded body having a predetermined shape upon integrally molding the mixture through extrusion molding, it is possible to further improve the production efficiency of the honeycomb structured body.

In accordance with the method for manufacturing the honeycomb structured body according to claim 5, a plunger-type molding may be employed as extrusion molding.

Since the method for manufacturing the honeycomb structured body according to claim 6 further comprises the process of laminating honeycomb members having excellent thermal shock resistance and achieving a good balance between rigidity and toughness, it is possible to enhance reliability of the honeycomb structured body as a product.

In accordance with the honeycomb structured body according to claim 7, since some of the fixed portions formed by the inorganic matter has a fissure, when a thermal stress arises in the honeycomb structured body in use, the thermal stress can be alleviated by the fixed portions with a fissure, leading to prevention of cracking and crazing from spreading through the entire honeycomb structured body. Here, without any fissure in the fixed portions, cracking and crazing may spread at a time in the entire honeycomb structured body due to its low toughness. The presence of a fissure in some of the fixed portions causes alleviation of the thermal stress in the respective portions of the honeycomb structured body, with the result that it is possible to obtain a honeycomb structured body having high thermal shock resistance and achieving a good balance between rigidity and toughness on the whole.

### BEST MODE FOR CARRYING OUT THE INVENTION

Hereinafter, embodiments of the present invention will be described in reference to the drawings.

### (First embodiment)

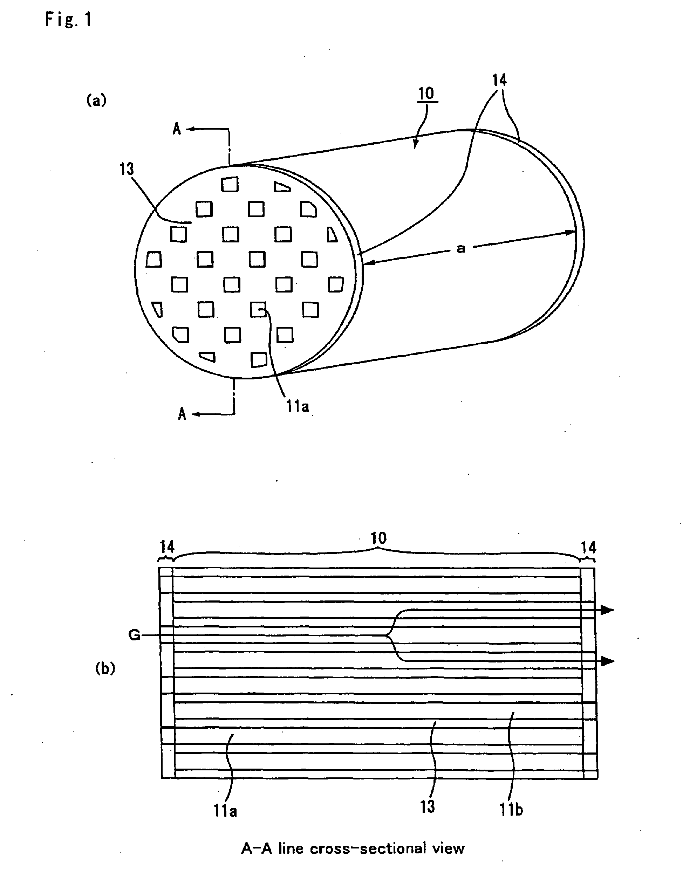

Fig. 1(a) is a perspective view that schematically illustrates one example of a honeycomb structured body according to the first embodiment, and Fig. 1(b) is a cross-sectional view taken along line A-A of Fig. 1(a).

A honeycomb structured body 10 according to the first embodiment mainly includes inorganic fibers and an inorganic matter, and has an integrally molded round pillar shape as illustrated in Figs. 1 (a) and 1 (b). In the honeycomb structured body 10, a plurality of cells 11a, 11b are disposed in parallel with one another in a longitudinal direction (a direction shown by an arrow a in Fig. 1(a)) with a cell wall 13 therebetween. And as illustrated in Figs. 1(a) and 1(b), a metal member for an end portion 14 is disposed on both end faces of the honeycomb structured body 10 so as to seal either one of the end portions of each of the cells 11a, 11b.

By disposing the member for an end portion 14 on both end faces of the honeycomb structured body 10, exhaust gases G introduced from one end face of the honeycomb structured body 10 (left side in Fig. 1(b)) into a cell 11a are allowed to flow out from a cell 11b in which the other end face (right side in Fig. 1(b)) is open, after always passing through a cell wall 13 separating the cell 11a and the cell 11b.
Thus, in the honeycomb structured body 10, PMs in the exhaust gases G will be captured on the cell wall 13. That is, the honeycomb structured body 10 on which the member for an end portion 14 is disposed functions as a filter. Here, in the case where the member for an end potion 14 is not disposed thereon, it is possible to use the honeycomb structured body 10 as a catalyst supporting carrier.

The honeycomb structured body 10 mainly includes inorganic fibers and an inorganic matter, and the cell wall 13 thereof has a high porosity of 75 to 95%.
The cell wall 13 of the honeycomb structured body 10 having a porosity of less than 75% makes it difficult to perform deep-layer filtering of PMs, and also makes it difficult to increase the inner temperature of the honeycomb structured body to a temperature necessary for combustion of the PMs upon carrying out a regenerating treatment on the honeycomb structured body, leading to reduction in the continuous regenerating capability of the honeycomb structured body.
In contrast, the cell wall 13 of the honeycomb structured body 10 having a porosity of more than 95% makes the percentage of pores in the honeycomb structured body too high, making it difficult to properly maintain the strength of the honeycomb structured body.
And the average pore diameter of the cell wall 13 of the honeycomb structured body 10 is desirably 10 to 60 µm due to its suitability for performing deep-layer filtering of PMs.

The configuration of the honeycomb member 10 will be described in further detail.
The honeycomb structured body 10 mainly includes inorganic fibers and an inorganic matter, and silica as an inorganic matter forms a fixed portion at which alumina fibers as inorganic fibers are firmly fixed to one another.

Here, the state in which an inorganic matter forms a fixed portion in which inorganic fibers are firmly fixed to one another refers to: a state in which the inorganic matter, which is locally located (present) at the intersection of the inorganic fibers (with or without mutual contacts among the inorganic fibers, firmly fixes the inorganic fibers to one another; a state in which the inorganic matter, which is locally located (present) in the vicinity of the intersection of the inorganic fibers, firmly fixes the inorganic fibers to one another; or a state in which the inorganic matter, which is locally located (present) over the entire area including the intersection of the inorganic fibers and the vicinity thereof, firmly fixes the inorganic fibers to one another.

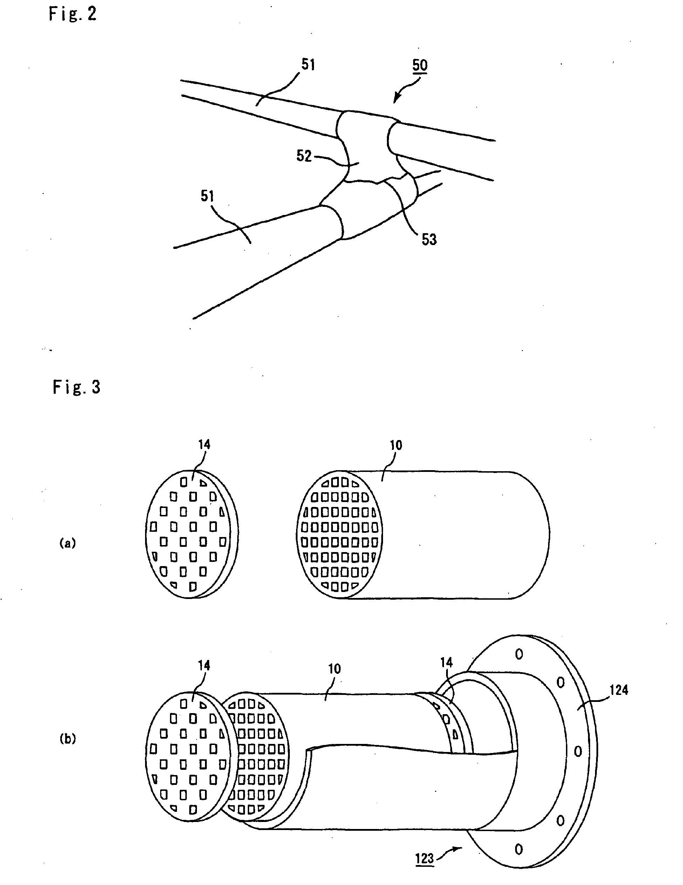

Fig. 2 is a portion of a honeycomb structured body 10 and a perspective view that schematically illustrates one example of an embodiment of a fixed portion in which an inorganic matter firmly fixes inorganic fibers to one another.
As illustrated in Fig. 2, a glass (silica) 52, an inorganic matter, is firmly fixed at the intersection between the alumina fibers 51, inorganic fibers, or in the vicinity thereof, and thereby the glass 52, firmly fixed at the intersection or in the vicinity thereof, forms a fixed portion 50 and serves so as to simultaneously couple two of the alumina fibers 51 to one another at the intersection or in the vicinity thereof. Here, the glass 52 is firmly fixed at the intersection between the alumina fibers 51 or in the vicinity thereof, by undergoing melting and solidification.

As is illustrated in Fig. 2, in the case where the glass 52 is locally located at the intersection of the alumina fibers 51 or in the vicinity thereof, many of the alumina fibers 51 are coated with the glass 52 at the intersection of the alumina fibers 51 with other alumina fibers 51 or in the vicinity thereof, with the glass being hardly fixed to most of the other portions.
In the present specification, the mutual intersection between the inorganic fibers or the vicinity thereof refers to an area within a distance of ten times the fiber diameter of the inorganic fibers from the point at which the inorganic fibers are in closest contact with one another.

Here, the fixed portion 50 has a fissure 53, and it is possible to alleviate a thermal stress in this fissure portion when temperature becomes high during the regenerating treatment. In this manner, in order to attain the desired degree of alleviation of the thermal stress, fixed portions 50 present in the honeycomb structured body 10 appropriately contain some fixed portions 50 with a fissure 53. The fixed portions 50 with a fissure 53 are not lopsidedly present in part of regions of the honeycomb structured body 10 but uniformly present in the entire honeycomb structured body 10. Moreover, as illustrated in Fig. 2, the fissure 53 may be introduced into the entirety (or the entire periphery) of the fixed portion 50, or may be introduced into part of a region of the fixed portion 50.

In the honeycomb structured body 10, the number of portions where alumina fibers 51 as inorganic fibers are firmly fixed to one another by interposing a glass 52 as an inorganic matter is not one per one alumina fiber 51, but there are some alumina fibers that are firmly fixed to one another by interposing a glass at two or more portions. Consequently, in the honeycomb structured body 10, many alumina fibers are entangled with one another in a complex manner, which will prevent untangled alumina fibers, and thus the honeycomb structured body 10 has a predetermined strength and has a configuration that enables alleviation of the thermal stress in the fixed portion upon generation of the thermal stress.

Members for an end portion 14 disposed on both end faces of the honeycomb structured body 10 are plate members made of metal in which through holes are formed in predetermined positions. The through holes of the members for an end portion 14 are formed in such a manner that the cells of the honeycomb structured body 10 are open in a ckeckered pattern on both end faces of the honeycomb structured body 10 when the members for an end portion 14 are disposed on both end portions of the honeycomb structured body 10. Here, when the members for an end portion 14 are disposed on both end portions of the honeycomb structured body 10, through holes are not formed in the portion of the one member for an end portion 14 corresponding to the portion in which through holes are formed in the other member for an end portion 14; on the other hand, through holes are formed in the portion of one member for an end portion 14 corresponding to the portion in which through holes are not formed in the other member for an end portion 14. That is, the formation positions of the respective through holes are different in the members for an end portion disposed on both end portions. In addition, either one of the end portions of each of the cells are sealed by disposing such members for an end portion 14.

Next, the following description will discuss the method for manufacturing the honeycomb structured body according to the first embodiment. Here, a manufacturing method thereof in the case of using the honeycomb structured body as a filter will be described.
(1) Mixed are alumina fibers (as inorganic fibers) that are inorganic fibers mainly forming the honeycomb structured body; glass fibers (as a raw material of an inorganic matter) that are to firmly fix alumina fibers to one another through the subsequent processes to form a fixed portion; organic binders; and water. Then, the resultant mixture is further mixed with a pore-forming agent, a plasticizer, a lubricant, and the like, if necessary, to prepare a mixture for molding.
(2) Subsequently, a pillar-shaped molded body with a large number of cells formed in the longitudinal direction is manufactured by carrying into a plunger-type molding machine the mixture for molding, and continuously extruding the mixture for molding through a die in which predetermined through holes are formed in the plunger-type molding machine.
(3) The following treatments are carried out: a cutting treatment for cutting the extruded molded body to a predetermined length to manufacture a honeycomb molded body, an integrally molded body; a drying treatment for removing moisture in the molded body; and a degreasing treatment for removing an organic matter during the molding.

Here, the drying treatment and the degreasing treatment may be performed if necessary.

Here, upon cutting the honeycomb molded body, in which to the end portion to which the molded body molded in the extrusion-molding process is transferred, a molded body cutting apparatus provided with a cutting means such as a laser and a cutter is used. In this molded body cutting apparatus, while the cutting means is being transferred at a speed synchronous to the extruding speed of the molding body, the molded body is cut by the cutting means. It is possible to carry out the cutting process continuously by using the cutting apparatus having the above-mentioned mechanism, and consequently to improve the mass productivity.

In addition, the drying treatment may be carried out by using, for example, a microwave heat drying apparatus, a hot-air drying apparatus, an infrared ray drying apparatus or the like, and in this case, a plurality of these apparatuses may be used in combination.
Specifically, in the case of using a hot-air drying apparatus, for example, the drying treatment may be carried out at a set temperature of 100 to 150°C for 5 to 60 minutes under ambient atmosphere. In this case, the arrangement is desirably made so that the hot air is directed to the molded body in parallel with the longitudinal direction thereof so as to allow the hot air to pass through the cells. By allowing the hot air to pass through the cells of the molded body, the drying treatment of the molded body will be carried out efficiently.

Normally, the degreasing treatment is desirably carried out in an oxidizing atmosphere such as ambient atmosphere so as to oxidatively decompose the organic substances. Specifically, the degreasing treatment may be carried out by heating at a set temperature of 200 to 600°C under ambient atmosphere for 1 to 5 hours. With respect to the degreasing furnace used herein, not particularly limited, a batch-type degreasing furnace may be used; however, in order to continuously carry out the treatment, a continuous furnace provided with a belt conveyor is desirably used.

(4) A heating treatment is performed of heating the molded body at a temperature less than the melting point of the alumina fibers as inorganic fibers and not less than the melting point of the glass matter as an inorganic matter.
More specifically, the heating treatment may be carried out at a temperature of 900 to 1050°C for 5 to 15 hours.
Through this heating treatment, the alumina fibers are firmly fixed to one another by interposing an inorganic matter comprising the glass fibers.

(5) The heated honeycomb molded body is cooled to a normal temperature (room temperature: 15 to 25°C) to manufacture a honeycomb structured body including a honeycomb member. The melted inorganic matter is solidified by cooling a honeycomb molded body to thereby form fixed portions in which alumina fibers are firmly fixed to one another in the honeycomb member. The average rate of change of the temperature drop to a normal temperature upon this cooling is 50 to 500°C/hr. It is possible to introduce a fissure into some of the fixed portions upon cooling the honeycomb molded body, by setting the value within the aforementioned range as the average rate of change of the temperature drop. The fissure has a size of several micrometers to hundreds of micrometers. The average rate of change of the temperature drop to a normal temperature (°C/hr) can be found by dividing the temperature difference (°C) between the maximum value of the heating temperature achieved during the heating treatment and a normal temperature by a period of time (hr) needed to cool the honeycomb molded body by the temperature difference.

(6) An acid treatment may be carried out on the honeycomb structured body, if necessary, after manufacturing the honeycomb structured body by this method.
The acid treatment may be conducted by immersing the honeycomb structured body in a solution such as a hydrochloric acid solution and a sulfuric acid solution. More specifically, the acid treatment may be performed, for example, in the solution having a concentration of 1 to 10 mol/1, at a treatment period of time of 0. 5 to 24 hours, and for a treatment temperature of 70 to 100°C.
By carrying out the acid treatment, components other than silica are eluted, so that the heat resistance of the honeycomb structured body is consequently improved.

Moreover, the heating treatment may be performed again after the acid treatment.
More specifically, the heating treatment may be carried out at 1050°C for 5 hours.

(7) Members for an end portion are manufactured separately from the processes (1) to (6) upon using a honeycomb structured body as a filter.
More specifically, after a metal plate is machined into a disk shape having a predetermined shape, through holes are formed in a predetermined position through a laser machining process or a punching process; thereby the members for an end portion are manufactured.

(8) Next, the members for an end portion are disposed on both end faces of the honeycomb structured body. The members for an end portion are disposed on both end faces of the honeycomb structured body inside a metal casing while positioning both the members for an end portion and the honeycomb structured body. This method will be described in reference to the drawings.

Fig. 3 (a) is a perspective view that schematically illustrates a honeycomb structured body and a member for an end portion that configure a honeycomb structured body, and Fig. 3 (b) is a perspective view for describing a method for disposing the member for an end portion on both end portions of the honeycomb structured body illustrated in Fig. 3(a).

A honeycomb structured body 10 and (two) members for an end portion 14, as illustrated in Fig. 3 (a), are manufactured, and simultaneously, a metal casing 123 having a can-type (cylindrical) shape with a pressing metal member 124 attached on one side, as illustrated in Fig. 3(b), is prepared separately. And one member for an end portion 14 is disposed on a side of a pressing metal member 124 in the casing 123. Next, the honeycomb structured body 10 is disposed while being positioned with the pre-placed member for an end portion 14, and thereafter the other member for an end portion 14 is disposed while being positioned with the honeycomb structured body 10. Subsequently, another pressing metal member is attached and fixed to the other side opposite to the side where the above-mentioned pressing metal member 124 is attached.

Hereinafter, the effects of the honeycomb structured body according to the present embodiment will be mentioned.
(1) Since some of the fixed portions formed by an inorganic matter has a fissure, when a thermal stress arises in the honeycomb structured body in use it is possible to alleviate the thermal stress in the fixed portions with a fissure. Since the fixed portions with a fissure are uniformly present in the entire honeycomb structured body and the fissure has a size of several micrometers to hundreds of micrometers the thermal stress is alleviated in the respective portions. It is possible to obtain a honeycomb structured body having high thermal shock resistance and achieving a good balance between rigidity and toughness on the whole.

(2) Since the inorganic matter contains silica, it is possible to obtain a honeycomb structured body excellent in heat resistance.

(3) Since the inorganic fibers are alumina fibers, it is possible to improve the heat resistance of the honeycomb structured body.

(4) Since the honeycomb structured body comprises one member, it is possible to improve the production efficiency of the honeycomb structured body.

(5) The honeycomb molded body is heated at a temperature less than the melting point of the inorganic fibers and not less than the melting point of the raw material of the inorganic matter; and the heated honeycomb molded body is cooled to manufacture a honeycomb structured body comprising a honeycomb member, wherein a fissure is introduced into some fixed portions in the honeycomb member by setting to 50 to 500°C/hr an average rate of change of the temperature drop to a normal temperature, the fixed portion being formed by firmly fixing the inorganic fibers to one another by interposing the inorganic matter in the honeycomb member the fissure having a size of several micrometers to hundreds of micrometers. Thus, it is possible to introduce a fissure into the fixed portion by generating an appropriate thermal stress in the process of forming the fixed portion.

The following description will discuss the first embodiment in further detail by Examples, and the present invention is not limited only to these Examples.

### (Example 1)

### (A. Manufacture of honeycomb structured body)

(1) First, 12.3 parts by weight of silica-alumina fibers (average fiber length: 0.3 mm, average fiber diameter: 5 µm) made of 72% of alumina and 28% of silica, 6.2 parts by weight of glass fibers (average fiber diameter: 5 µm, average fiber length: 0.1 mm), 11.7 parts by weight of an organic binder (methyl cellulose), 7.1 parts by weight of a pore-forming agent (acryl resin), 8.1 parts by weight of a plasticizer (UNILUB, made by NOF Corporation), 3.8 parts by weight of a lubricant (glycerin), and 50.9 parts by weight of water were mixed, and sufficiently stirred to prepare a mixture for molding.

(2) The mixture for molding was carried in a cylinder from a mixture tank of a plunger-type extrusion-molding machine, and the piston was pressed toward the die side so that the mixture was extruded through the die to manufacture a round pillar-shaped molded body.

(3) The molded body having a round pillar shape was cut by using a cutting apparatus having a cutting disc as its cutting member, to obtain a honeycomb molded body.

(4) The honeycomb molded body, obtained in the process (3), was dried at 200°C for 3 hours under ambient atmosphere by using a microwave drying apparatus and a hot-air drying apparatus so that moisture contained in the honeycomb molded body was removed.

(5) The honeycomb molded body, obtained through the drying treatment, underwent a degreasing treatment for removing organic substances contained in the honeycomb molded body by heating on the molded body at 400°C for 3 hours in an electric furnace under ambient atmosphere.

(6) The honeycomb molded body, obtained through the degreasing treatment, underwent a heating treatment at 950°C for 5 hours in a firing furnace under ambient atmosphere. Thereafter, the resulting molded body was immersed into an HC1 solution of 4 mol/l at 90°C for one hour so that an acid treatment was carried out thereon, and this again underwent a heating treatment at 1050°C for 5 hours in a firing furnace under ambient atmosphere.

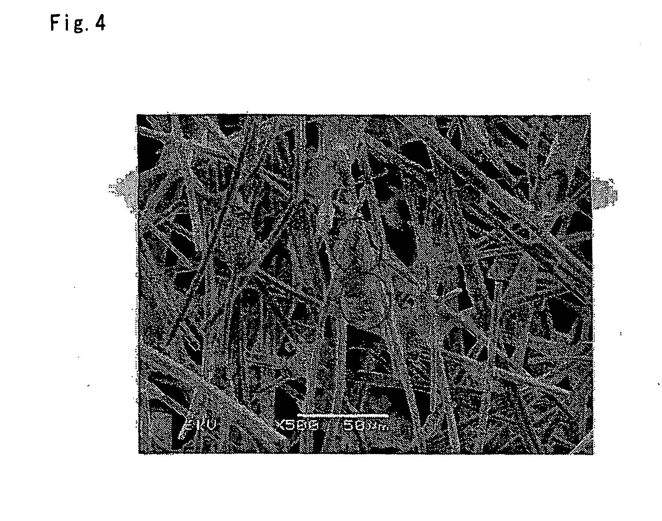

(7) After completion of the heating treatment at 1050°C for five hours, the heated honeycomb molded body was cooled by setting the average rate of change of the temperature drop to 150°C/hr to manufacture a honeycomb structured body having cells of 4.5 mm x 4.5 mm with mutual intervals of 2 mm and having a length of 60 mm in the longitudinal direction. Through the process (7), a fissure is formed in some fixed portions in which alumina fibers are firmly fixed to one another by interposing a glass. Fig. 4 is an electron microscope photograph showing fixed portions some of which contain a fissure.

### (B. Manufacture of member for end portion)

After a metal plate made of Ni-Cr alloy had been machined into a disc shape having a diameter of 160 mm x a thickness of 1 mm, a laser machining process is carried out on this so that a member for an end portion with through holes of 4.5 mm x 4.5 mm formed in a predetermined position was manufactured.
Two members for an end portion were manufactured in this process, and through holes were formed in each of these members for an end portion at mutually different positions so that portions of the sealed cells were made different between one end face and the other end face of the honeycomb structured body when the members for an end portion were disposed in the subsequent process.

### (C. Disposition of member for end portion in honeycomb structured body)

First, a casing (see Fig. 3(b)) having a can-type (cylindrical) shape made of SUS with a pressing metal member attached on one side was prepared and vertically placed with the side on which the pressing metal member had been attached facing down. Thereafter, one of the members for an end portion, obtained in the process B, a honeycomb structured body, obtained in the process A, and the other member for an end portion were placed in this order in the metal casing while each of their through holes being positioned. Subsequently, the pressing metal member was attached and fixed to the other end of the casing. In this process, the members for an end portion were disposed in such a manner that portions of the sealed cells were made different between the end face on the inlet side and the end face on the outlet side of the honeycomb structured body (i.e. so that only either one of the end portions of each of the cells was sealed). This leads to the honeycomb structured body functioning as a filter.

### (Evaluation on presence of fissure in fixed portion)

The presence of a fissure was evaluated in the fixed portion of the manufactured honeycomb structured body based on an electron microscope photograph. Here, the fissure refers to a fine fissure pre-formed in the fixed portion, and the fissure having a size of several micrometers to hundreds of micrometers was evaluated to be a fissure.
Table 1 shows the results.

### (Evaluation on presence of cracks upon regenerating treatment)

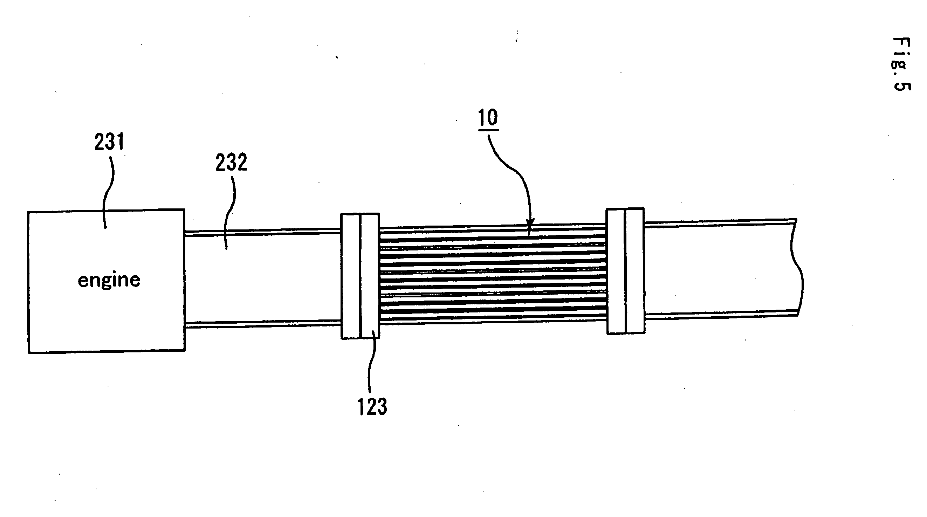

As illustrated in Fig. 5, a honeycomb structured body 10 and members for an end portion 14 were installed in the metal casing 123 so that the honeycomb structured body 10 may function as a filter, and then a 2L diesel engine 231 connected to an introducing pipe 232 was driven at the number of revolutions of 3000 min⁻¹ and a torque of 40 Nm until the amount of captured PMs had reached 6 g/L. Thereafter, the engine 231 was driven at full load at the number of revolutions of 4000 min⁻¹, and at the time when the temperature of the honeycomb structured body 10 became constant at about 700°C, the engine was driven at the number of revolutions of 1050 min⁻¹ and a torque of 30 Nm so that PMs were forcefully burned. Visual observation was made on the presence of cracks in the honeycomb structured body 10 at this time before and after the regenerating treatment. Here, the cracks refer to visible cracks generated by a thermal shock, and the cracks having a size of approximately several millimeters to tens of millimeters were evaluated to be cracks.
Table 1 shows the results.

### (Examples 2 and 3)

A honeycomb structured body was manufactured in the same manner as in Example 1, except that in the process A (7) of Example 1, the average rate of change of the temperature drop was changed to the values shown in Table 1.
And the same evaluations as in Example 1 were made regarding the honeycomb structured bodies of Examples 2 and 3.
Table 1 shows the results.

### (Comparative Examples 1 and 2)

A honeycomb structured body was manufactured in the same manner as in Example 1, except that in the process A (7) of Example 1, the average rate of change of the temperature drop was changed to the values shown in Table 1.
And the same evaluations as in Example 1 were made regarding the honeycomb structured bodies of Comparative Examples 1 and 2.
Table 1 shows the results.

**[Table 1]**

| | Average rate of change of temperature drop [°C] | Before regenerating treatment | | After regenerating treatment |
|---|---|---|---|---|
| | | Presence of fissure in fixed portion | Presence of crack in honeycomb structured body | Presence of crack in honeycomb structured body |
| Example 1 | 150 | present | absent | absent |
| Example 2 | 50 | present | absent | absent |
| Example 3 | 500 | present | absent | absent |
| Comparative Example 1 | 30 | absent | absent | present |
| Comparative Example 2 | 600 | NA | present | NA |

| | | | | |
|---|---|---|---|---|
| NA = Not Available | | | | |

As shown in Table 1, in each of the honeycomb structured bodies according to Examples 1 to 3, a fissure was introduced into the fixed portion, and no cracks were generated upon the regenerating treatment, and the regenerating treatment was favorably performed. This is presumably because the fissure in the fixed portion alleviated a thermal shock during the regenerating treatment.
On the other hand, in the honeycomb structured body according to Comparative Example 1, cracks occurred after the regenerating treatment, and durability thereof was low upon the regenerating treatment. This is probably because in Comparative Example 1 a fissure was not introduced into a fixed portion due to a small average rate of change of the temperature drop and thereby alleviation of a thermal stress was not achieved. Moreover, in Comparative Example 2, cracks had generated before the regenerating treatment of the honeycomb structured body was performed. This is supposedly because the average rate of change of the temperature drop was so large that cracks generated at that point in time.

### (Other embodiments)

In the honeycomb structured body of the present invention, a catalyst may be supported on at least part of the inorganic fibers. As long as able to lower the burning temperature of PMs, the catalyst is not particularly limited, and desirably an oxide catalyst. Examples of the oxide catalyst include CeO₂ K₂O, ZrO₂ FeO₂ Fe₂O₃, CuO, CuO₂, Mn₂O₃, MnO, and complex oxides indicated by a composition formula AₙB₁₋ₙCO₃, provided that in the formula, A is La, Nd, Sm, Eu, Gd or Y, B is an alkali metal or alkali-earth metal, and C is Mn, Co, Fe, or Ni. These may be used independently, or two or more of them may be used in combination, and the oxide catalyst desirably contains at least CeO₂. The burning temperature of PMs can be lowered by supporting such an oxide catalyst.

The amount of the supported catalyst (g/L) is desirably set to 10 to 200 g/L with respect to the apparent volume (L) of the honeycomb structured body.
The amount of the supported catalyst of less than 10 g/L tends to cause many portions of the honeycomb structured body in which no catalyst is supported, resulting in a reduction in the possibility of PMs coming into contact with the catalyst and the subsequent failure to sufficiently lower the burning temperature of PMs. In contrast, even when the amount thereof is more than 200 g/L, the possibility of contact between PMs and the catalyst is not improved so much.

With respect to the fiber length of the inorganic fibers forming the honeycomb structured body, the desirable lower limit value is 0.1 mm, and the desirable upper limit value is 100 mm.
The fiber length of less than 0.1 mm makes it difficult to entangle the inorganic fibers with one another and firmly fix the inorganic fibers to one another by interposing an inorganic matter, sometimes failing to provide sufficient strength of the honeycomb structured body; in contrast, the fiber length of more than 100 mm makes it difficult to manufacture a homogeneous honeycomb structured body, sometimes failing to provide a honeycomb structured body having sufficient strength.
The more desirable lower limit value of the fiber length is 0.5 mm, and the more desirable upper limit value is 50 mm.

With respect to the fiber diameter of the inorganic fibers, the desirable lower limit value is 0.3 µm, and the desirable upper limit value is 30 µm.
The fiber diameter of less than 0.3 µm tends to cause the inorganic fiber to be easily broken, with the result that the obtained honeycomb structured body becomes susceptible to wind erosion; in contrast, the fiber diameter of more than 30 µm makes it difficult for an inorganic matter such as a glass to firmly fix inorganic fibers to one another, sometimes failing to provide sufficient strength.
The lower limit value of the fiber diameter is more desirably 0.5 µm, and the upper limit value thereof is more desirably 15 µm.

The average pore diameter of the honeycomb structured body is desirably 1 to 100 µm.
In the case where the average pore diameter is less than 1 µm, deep-layer filtering of PMs is not performed, with the result that a pressure loss may increase in a short period of time. On the other hand, when the average pore diameter is more than 100 µm, PMs may easily pass through the pores, making it difficult to function as a filter.
Here, the porosity and pore diameter can be measured through conventionally known methods, such as a measuring method using a mercury porosimeter, Archimedes method, and a measuring method using a scanning electron microscope (SEM).

Moreover, in the honeycomb structured body, a thickness of the cell wall is desirably 0.2 mm or more. The thickness of less than 0.2 mm may cause insufficient strength of the honeycomb structured body.
Here, the desirable upper limit of the thickness of the cell wall is less than 5.0 mm. In the case where the thickness of the cell wall is too high, the pressure loss may be too high. Moreover, ashes generated upon burning of PMs tend to enter the pores deeply, making it difficult to draw the ashes.

And the desirable aperture (opening) ratio of the honeycomb structured body is 30 to 60%.
In the case where the aperture ratio is less than 30%, the pressure loss of the honeycomb structured body may be too high; and the aperture ratio of more than 60% may cause insufficient strength of the honeycomb structured body.

The cell density on the plane perpendicular to the longitudinal direction of the cells of the honeycomb structured body (hereinafter, simply referred to as the cross section of the honeycomb structured body) is not particularly limited, and the lower limit thereof is desirably 0.16 pcs/cm² (1.0 pc/in²), and the upper limit thereof is desirably 93 pcs/cm² (600 pcs/in²); more desirably, the lower limit value is 0.62 pcs/cm² (4.0 pcs/in²), and the upper limit value is 77.5 pcs/cm² (500 pcs/in²).

The cell size on the cross section of the honeycomb structured body is not particularly limited, and the lower limit thereof is desirably 0.8 mm x 0. 8 mm, and the upper limit thereof is desirably 16 mm x 16 mm.

The apparent density of the honeycomb structured body is desirably 0.04 to 0.4 g/cm³.
The apparent density of less than 0.04 g/cm³ may cause insufficient strength; whereas in the case where the apparent density exceeds 0.4 g/cm³, the temperature of the honeycomb structured body tends not to increase during the regenerating treatment and is disadvantageous in continuously burning PMs. Here, the apparent density of the honeycomb structured body refers to a value obtained by dividing the mass (g) of the honeycomb structured body by the apparent volume (cm³) of the honeycomb structured body. And the apparent volume of the honeycomb structured body refers to a volume obtained by calculating the outer shape of the honeycomb structured body, a volume including pores and apertures (cells) of the honeycomb structured body.

The tensile strength of the honeycomb structured body configuring the honeycomb structured body is desirably 0.3 MPa or more, and more desirably 0.4 MPa or more. The tensile strength of less than 0.3 MPa may provide insufficient reliability to the honeycomb structured body.
Here, the tensile strength can be measured by forming the honeycomb structured body into a sheet shape, with the two end faces thereof being fixed by jigs, and by measuring this with the use of an INSTRON type universal tensile meter.

The shape of the cells on the cross section of the honeycomb structured body is not particularly limited to a square shape, and any desired shape, such as a triangular shape, a hexagonal shape, an octagonal shape, a dodecagonal shape, a round shape, an elliptical shape and a star shape, may be used.

The shape of the cross section of the honeycomb structured body of the present invention is not particularly limited to a round shape, and various shapes such as a rectangular shape may be used; however, it is desirable to use a shape enclosed only by a curved line or by curved lines and straight lines. In addition to a round shape, specific examples thereof include a rectangular pillar shape, an elongated round shape (racetrack shape), a shape in which one portion of a simple closed curved line such as a rectangular pillar shape or a racetrack shape has a recess portion (concave shape), and the like.

The member for an end portion configuring the honeycomb structured body is not particularly limited as long as through holes are formed in a predetermined position, and the material thereof may be the same material as that of the honeycomb structured body or may be a porous or solid (dense) metal ceramic.
Here, in the case where a metal member for an end portion is used as the member for an end portion, it is possible to simultaneously give a role as a pressing metal member to the member for an end portion by welding the member for an end portion upon disposing the member for an end portion in a metal casing.

Examples of the material for the casing include metals etc. such as stainless steel (SUS), aluminum, and iron.

A plunger-type molding machine to be used upon extrusion molding a mixture for molding in the process for manufacturing the honeycomb structured body will be described in further detail in reference to the drawing.

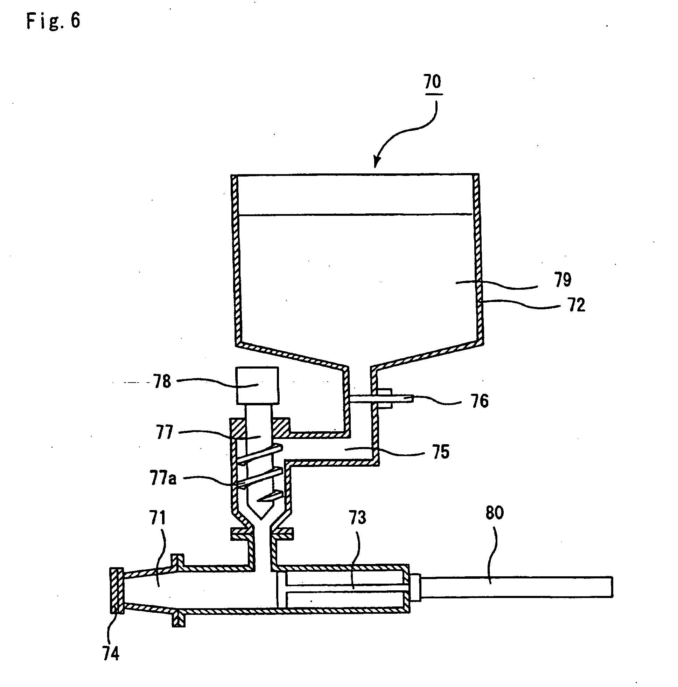

Fig. 6 is a cross-sectional view that schematically illustrates a plunger-type molding machine.

Aplunger-type molding machine 70 is formed by: a cylinder 71; a piston 73 provided with a mechanism capable of reciprocally moving between the front side and the rear side in the cylinder (transverse direction in the figure); a die 74 that is attached to the tip of the cylinder, and has pores formed therein so as to carry out an extrusion-molding process to form a pillar-shaped molded body with a large number of cells formed in the longitudinal direction; and a mixture tank 72, placed on the upper portion of the cylinder 71, to which a pipe 75 is connected from the cylinder 71. Moreover, a shutter 76 is placed just below the mixture tank 72 so that the carry-in operation of the mixture from the mixture tank 72 can be interrupted. Here, a screw 77 with blades 77a is attached to the pipe 75 and allowed to rotate by a motor 78. The size of the blade 77a is virtually the same as the diameter of the pipe so that the mixture 79 is hardly allowed to flow reversely. Here, the mixture prepared in the mixing process is carried in the mixture tank 72.

Upon manufacturing a molded body by using the plunger-type molding machine 70, first, the shutter 76 is opened, and the mixture, obtained in the mixing process, is carried in the cylinder 71 from the mixture tank 72 by rotating the screw. At this time, the piston 73 is moved to the end portion of the cylinder 71 on the right side in Fig. 6 according to the carry-in amount of the mixture.
When the cylinder 71 is filled with the mixture, the shutter 76 is closed and the rotation of the screw 77 is simultaneously stopped. When the piston 73 is pressed and shoved into the die side with the inside of the cylinder 71 being filled with the mixture 79, the mixture is extruded through the die 74 so that a pillar-shaped molded body in which a plurality of cells are formed with a wall portion therebetween is continuously formed. At this time, according to the shape of the pore formed in the die, cells having the corresponding shape are formed. By repeating these processes, a molded body can be manufactured. Depending on the viscosity and the like, a molded body can be continuously manufactured, by rotating the screw 77 with the cylinder 73 being stopped.
Here, in the plunger-type molding machine 70 illustrated in Fig. 6, an oil cylinder 80 is used as the driving source used for shifting the piston 73; however, an air cylinder may be used, or a ball screw or the like may also be used.

Examples of the molding machine to be used upon extrusion molding a mixture for molding include a single-axis screw-type extrusion-molding machine, a multi-axis screw-type extrusion-molding machine, and the like, in addition to a plunger-type molding machine.

In the method for manufacturing the honeycomb structured body of the first embodiment, a honeycomb structured body is manufactured by molding a mixture for molding with a plunger-type molding machine, and thereafter carrying out a drying treatment, a degreasing treatment, a heating treatment, and a predetermined cooling treatment thereon; however, the honeycomb structured body may be manufactured by other methods.

Examples of other methods for manufacturing a honeycomb structured body include a method with use of a frame member (hereinafter, also referred to as a manufacturing method with use of a frame member) made of: a bottom plate on which pillar members used for forming cells of the honeycomb structured body are installed vertically to the main surface and in a lattice pattern in a plan view; and an outer frame member provided so as to enclose the periphery of the bottom plate and the pillar members. Hereinafter, this method will be described in further detail.

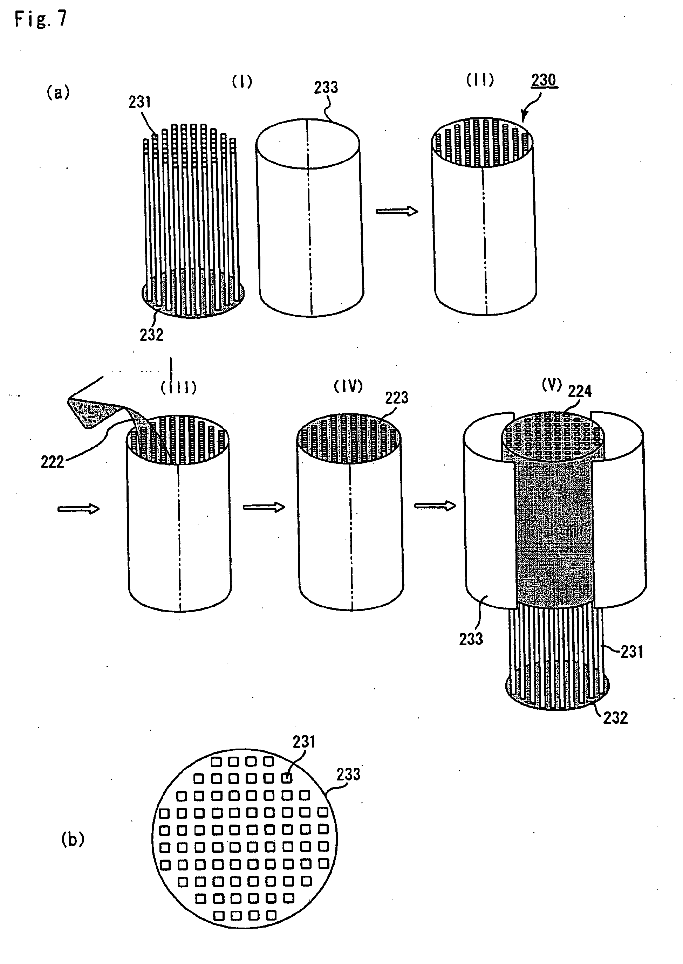

Figs. 7(a) (I) to (VI) are schematic views for describing part of processes for a method for manufacturing a honeycomb structured body used for a frame member, and Fig. 7 (b) is a top view that schematically illustrates the inside of the frame member in which pillar members are vertically installed.

In the method for manufacturing the frame member,
(1) First, a mixture for molding containing a thermosetting resin is prepared by mixing inorganic fibers mainly forming a honeycomb structured body, an inorganic matter that is to firmly fix inorganic fibers to one another through the subsequent processes and thereby to form a fixed portion, and a thermosetting resin, and furthermore mixing a solvent, a dispersant, a curing agent, and the like if necessary.

(2) Next, the frame member is filled with the mixture for molding containing a thermosetting resin.
As the frame member, there is employed a frame member 230 (see Fig. 7 (a) (II)) made of: a bottom plate 232 on which pillar members 231 used for forming cells of the honeycomb structured body are installed vertically to the main surface and in a lattice pattern in a plan view (see Fig. 7 (a) (I) and Fig. 7 (b) ) ; and an outer frame member 233 (see (I)) provided so as to enclose the periphery of the bottom plate 232 and the pillar members 231.
And the frame member 230 is filled with a mixture for molding containing a thermosetting resin 222 (see Fig. 7(a) (III)).
Here, a metal frame member can be preferably used as a frame member.

(3) Next, a thermosetting resin in the mixture for molding containing a thermosetting resin filled into the frame member 230 is cured, and a cured resin body 223 is formed inside the frame member 230 (see Fig. 7(a)(IV)).

(4) Next, the frame members 230 are removed from a cured resin body 223.
By detaching the pillar members 231, cells are formed in portions that have been occupied by the pillar members 231, and these are allowed to form cells for the honeycomb structured body through the following processes (see Fig. 7(a) (V)).
In this case, it is desirable to preliminarily form a draft angle of about 2° in each pillar member 231 so that the pillar members 231 can be easily drawn from the cured resin body 223.
Moreover, the outer frame member 233 is separately detached so that a pillar-shaped molded body 224 is formed.

A honeycomb structured body mainly including inorganic fibers and an inorganic matter can be manufactured by forming the molded body 224 as thus described, and thereafter carrying out a degreasing treatment, a heating treatment, and a predetermined cooling treatment thereon in the same manner as in the method for manufacturing the honeycomb structured body of the first embodiment.

In addition, in the manufacturing method with use of a frame member, the method may be used in which: a cured resin body 223 is formed by using core sand used for casting of a mold, and the cores made of a resin material, low-melting-point metal, water-soluble salts on which a high-pressure press-molding process is carried out, and the like, instead of the pillar members 231; and thereafter the cores are removed by methods, such as a washing/elution method, a burning method, a thermal-fusing method, instead of drawing the pillar members 231.

Examples of other methods for manufacturing the honeycomb structured body include a method with use of a vessel (hereinafter, also referred to as a manufacturing method through the three-dimensional sheet-forming process) that is made of: a vessel main body; a mesh formed on the bottom portion of the vessel main body; pillar-shaped masks that are installed vertically to the mesh and in a lattice pattern in a plan view, and are used for forming cells of the honeycomb structured body; and a liquid-filling unit that forms a space surrounded by the pillar-shaped masks, with the mesh serving as the bottom face, in which the mixture is carried. Hereinafter, this method will be described in further detail.

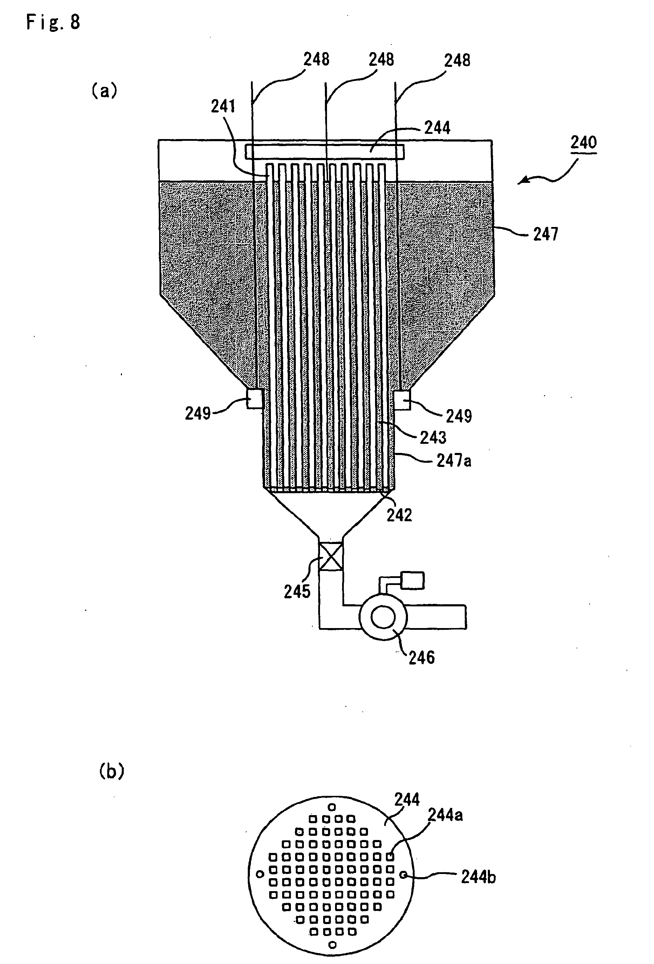

Fig. 8(a) is a view that schematically illustrates a vessel used in a manufacturing method through the three-dimensional sheet-forming process, and Fig. 8 (b) is a top view that schematically illustrates a vessel used in the manufacturing method through the three-dimensional sheet-forming process.

In the manufacturing method with use of a vessel,
(1) a mixture for molding is first prepared. The mixture for molding can be prepared by the same method as the method for manufacturing the honeycomb structured body of the first embodiment. In this method, a mixture for molding with an increased blending amount of water and having a viscosity reduced so as to enable sheet-forming is prepared.

(2) Next, the mixture for molding is carried in a liquid-filling unit 243 of the vessel 240 illustrated in Fig. 8 (a).
The vessel 240 illustrated in Fig. 8 (a) is configured by a vessel main body 247; a mesh 242 formed on the bottom portion of the vessel main body 247; pillar-shaped masks 241 that are installed vertically to the mesh 242 and in a lattice pattern in a plan view, and are used for forming cells of the honeycomb structured body; and a liquid-filling unit 243 that forms a space surrounded by the pillar-shaped masks 241, with the mesh 242 serving as the bottom face, in which the mixture is carried.
Moreover, the vessel 240 is provided with: a pressing plate 244 with through holes 244a having a lattice pattern being formed in portions corresponding to the pillar-shaped masks 241; a cock 245 and a pump 246 used for draining; a press driving unit used for press-inserting the pressing plate 244 onto the vessel main body 247; and a vibration unit, not illustrated, used for giving vibration to the vessel main body.
Here, the preparation of the mixture for molding in the process (1) may be performed in the vessel 240.

After carrying into the liquid-filling unit the mixture for molding, the mixture filled into the liquid-filling unit 243 is stirred as needed. The stirring process may be carried out by activating a vibration unit, not illustrated, used for giving vibration to the vessel main body. With respect to the specific vibration unit, for example, an oscillator provided with an ultrasonic resonator, a vibrator and the like may be used, and the unit may be installed on the side face of the vessel main body 247. This may also be installed in the vessel main body 247.

(3) Next, a dehydration treatment is carried out in which moisture in the mixture for molding is sucked so that water in the mixture for molding is drained through the mesh 242.
In this case, the cock 245 placed on the lower side of the mesh 242 is opened, and the pump 246 is actuated. Thus, the mixture for molding, filled into the liquid-filling unit 243, is sucked and filtered, and allowed to drop through the mesh 242, and drained through the cock 245. Consequently, the water contained in the mixture for molding has been dehydrated, so that a dehydrated body having a predetermined height from the bottom portion of the liquid-filling unit is formed.

After the dehydration treatment, the dehydrated body that has been dehydrated in the dehydration process may undergo a pressing process for compressing it with the pressing plate from the upper face. By carrying out the compressing process by applying a pressure thereto, a compressed body having a predetermined length, appropriate density and porosity, can be formed.

The apparatus and the method used for the pressing treatment are not particularly limited to those described below. A vessel 240, illustrated in Fig. 8 (a), is provided with motors 249 and four ball screws 248 coupled to the motors 249, both serving as a press driving unit; the four ball screws 248 are threaded with four screw holes 244b formed in a pressing plate 244; thus, the four ball screws 248 rotate in synchronism with one another so that the pressing plate 244 can be raised and lowered.
Moreover, the pressing plate 244 is prepared as a plate, as illustrated in Fig. 8(b), with through holes being formed in a lattice pattern in portions corresponding to the pillar masks 241.

Therefore, when the four motors 249 are driven in synchronism with one another, the pressing plate 244 is lowered downward so that the dehydrated body is compressed in the portion corresponding to the lower portion 247a of the vessel main body to be formed into a compressed body. As illustrated in Fig. 8(a), the lower portion 247a of the vessel main body has a shape corresponding to a honeycomb structured body so that when the pressing plate 244 is lowered to a portion at which the motors 249 are disposed, a compressed body having a round pillar shape is formed.
Here, the lower portion 247a of the vessel main body has a cylindrical shape, and the dehydrated body is compressed by the pressing plate 244, and filled into the lower portion 247a of the vessel main body to be formed in the shape of the honeycomb structured body.

(4) Next, by removing the pillar-shaped masks from the dehydrated body, the mask-removing process is carried out to form a pillar-shaped molded body with a large number of cells formed in the longitudinal direction. Thus, a pillar-shaped molded body having cells with a predetermined shape and predetermined length and density can be obtained.

And a honeycomb structured body mainly including inorganic fibers and an inorganic matter can be manufactured by forming the molded body as thus described, and thereafter carrying out a drying treatment, a degreasing treatment, a heating treatment, and a predetermined cooling treatment thereon in the same manner as in the method for manufacturing the honeycomb structured body of the first embodiment.

The description has been presented hereinabove concerning methods for manufacturing a honeycomb structured body comprising one member. However, a method for manufacturing a honeycomb structured body of the present invention is not limited to these methods, and the honeycomb structured body may be manufactured by reducing the length of the one member to form a lamination member and then laminating the lamination member.
In this case as well, since lamination members having a fissure in the fixed portions are employed, it is possible to suppress occurrence of cracks in the respective members, thereby improve the heat resistance of the honeycomb structured body, and consequently to enhance reliability of the honeycomb structured body as a product.

### BRIEF DESCRIPTION OF THE DRAWINGS

Fig. 1(a) is a perspective view that schematically illustrates one example of a honeycomb structured body according to the first embodiment, and Fig. 1(b) is a cross-sectional view taken along line A-A of Fig. 1(a).
Fig. 2 is a perspective view that schematically illustrates one example of an embodiment of a fixed portion in which an inorganic matter firmly fixes inorganic fibers to one another.
Fig. 3 (a) is a perspective view that schematically illustrates a honeycomb structured body and a member for an end portion that configure a honeycomb structured body, and Fig. 3 (b) is a perspective view for describing a method for disposing the member for an end portion on both end portions of the honeycomb structured body illustrated in Fig. 3(a).
Fig. 4 is an electron microscope photograph of a fixed portion with a fissure formed therein.
Fig. 5 is an explanatory view of a regenerating treatment apparatus.
Fig. 6 is a cross-sectional view that schematically illustrates a plunger-type molding machine.
Figs. 7 (a) (I) to (VI) are schematic views for describing part of processes for a method for manufacturing a honeycomb structured body used for a frame member, and Fig. 7 (b) is a top view that schematically illustrates the inside of the frame member in which pillar members are vertically installed.
Fig. 8(a) is a view that schematically illustrates a vessel used in a manufacturing method through the three-dimensional sheet-forming process, and Fig. 8 (b) is a top view that schematically illustrates a vessel used in the manufacturing method through the three-dimensional sheet-forming process.

### EXPLANATION OF SYMBOLS

- 10: Honeycomb structured body
- 11a, 11b: Cell
- 13: Cell wall
- 50: Fixed portion
- 51: Alumina fibers (inorganic fibers)
- 52: Glass (inorganic matter)
- 53: Fissure
- 123: Casing
- G: Exhaust gas

## Claims

1. A method for manufacturing a honeycomb structured body, comprising:
preparing a mixture containing an inorganic fiber and a raw material of an inorganic matter having a melting point less than a melting point of said inorganic fiber;
molding said mixture to manufacture a pillar-shaped honeycomb molded body in which a plurality of cells are disposed in parallel with one another in a longitudinal direction with a cell wall therebetween;
heating said honeycomb molded body at a temperature less than the melting point of said inorganic fiber and not less than the melting point of said raw material of the inorganic matter; and
cooling the heated honeycomb molded body to manufacture a honeycomb structured body comprising a honeycomb member,
wherein
a fissure is introduced into some fixed portions in said honeycomb member by setting to 50 to 500°C/hr an average rate of change of the temperature drop to a normal temperature, said fixed portion being formed by firmly fixing said inorganic fibers to one another by interposing said inorganic matter in said honeycomb member, the fissure having a size of several micrometers to hundreds of micrometers.

2. The method for manufacturing a honeycomb structured body according to claim 1,
wherein
said inorganic matter contains silica.

3. The method for manufacturing a honeycomb structured body according to claim 1 or 2,
wherein
said inorganic fiber is at least one selected from the group consisting of a silicon carbide fiber, an alumina fiber, a basalt fiber, a silica fiber, a silica-alumina fiber, a titania fiber, and a zirconia fiber.

4. The method for manufacturing a honeycomb structured body according to any of claims 1 to 3,
wherein
said mixture is integrally molded through extrusion molding.

5. The method for manufacturing a honeycomb structured body according to claim 4,
wherein
said extrusion molding is a plunger-type molding.

6. The method for manufacturing a honeycomb structured body according to any of claims 1 to 3, further comprising laminating said honeycomb member.

7. A honeycomb structured body produced in accordance with a method as described in anyone of claims 1-6.

## Patentansprüche

1. Verfahren zum Herstellen eines wabenförmig gegliederten Aufbaus, umfassend;
das Vorbereiten einer Mischung, umfassend eine anorganische Faser und ein Rohmaterial eines anorganischen Stoffes mit einem Schmelzpunkt, der niedriger ist als der Schmelzpunkt der anorganischen Faser;
das Ausformen der Mischung, um einen säulenförmigen wabenförmig ausgeformten Aufbau herzustellen, indem eine Vielzahl von Zellen parallel zueinander in Längsrichtung mit einer Zellwand dazwischen angeordnet sind;
das Erhitzen des wabenförmig geformten Aufbaus auf eine Temperatur, die niedriger ist als der Schmelzpunkt der anorganisches Faser und nicht niedriger als der Schmelzpunkt des Rohmaterials des anorganischen Stoffes; und
das Abkühlen des erhitzten wabenförmig geformten Aufbaus, um einen wabenförmig gegliederten Aufbau herzustellen, der eine Wabeneinheit umfasst, wobei ein Riss in einige befestigte Teilbereiche der Wabeneinheit durch Aushärten bei 50 bis 500°C/Stunde Durchschnittsgeschwindigkeit der Temperaturabfallveränderung auf eine normale Temperatur eingeführt wird, wobei der befestigte Teilbereich durch festes Anheften der anorganischen Fasern aneinander durch Vermaschen des anorganischen Stoffes in der Wabeneinheit gebildet wird, wobei der Riss eine Größe von mehreren Mikrometern bis Hunderten von Mikrometern hat.

2. Verfahren zum Herstellen eines wabenförmig geformten Aufbaus gemäß Anspruch 1, wobei der anorganische Stoff Siliziumdioxid enthält.

3. Verfahren zum Herstellen eines wabenförmig geformten Aufbaus gemäß Anspruch 1 oder 2, wobei
die anorganische Faser mindestens eine ausgewählt aus der Gruppe bestehend aus einer Siliziumcarbidfaser, einer Aluminiumoxidfaser, einer Basaltfaser, einer Siliziumdioxidfaser, einer Siliziumdioxid-Aluminiumoxidfaser, eine Titandioxidfaser und einer Zirkoniumdioxidfaser ist.

4. Verfahren zum Herstellen eines wabenförmig geformten Aufbaus gemäß einem beliebigen der Ansprüche 1 bis 3, wobei
die Mischung aus einem Stück durch Durchdrückungsausformung ausgeformt wird.

5. Verfahren zum Herstellen eines wabenförmig geformten Aufbaus gemäß Anspruch 4, wobei die Durchdrückungsausformung eine Kolben-artige Ausformung ist.

6. Verfahren zum Herstellen eines wabenförmig geformten Aufbaus gemäß einem beliebigen der Ansprüche 1 bis 3, weiterhin umfassend das Beschichten der Wabeneinheit.

7. Wabenförmig geformter Aufbau hergestellt in Übereinstimmung mit einem Verfahren wie in einem beliebigen der Ansprüche 1 bis 6 beschrieben.

## Revendications

1. Procédé pour fabriquer corps structuré en nid d'abeilles, comprenant :
la préparation d'un mélange contenant une fibre inorganique et une matière première d'une matière inorganique ayant un point de fusion inférieur à un point de fusion de ladite fibre inorganique ;
le moulage dudit mélange pour fabriquer un corps moulé en nid d'abeilles en forme de pilier dans lequel une pluralité de cellules sont disposées parallèlement les unes aux autres dans une direction longitudinale avec une paroi cellulaire celles-ci;
le chauffage dudit corps moulé en nid d'abeilles à une température inférieure au point de fusion de ladite fibre inorganique et non inférieure au point de fusion de ladite matière première de la matière inorganique ; et
le refroidissement du corps moulé en nid d'abeilles chauffé pour fabriquer un corps structuré en nid d'abeilles comprenant un élément en nid d'abeilles,
dans lequel
une fissure est introduite dans certaines parties fixes dans ledit élément en nid d'abeilles en fixant à 50 à 500 °C/h une vitesse moyenne de changement de la baisse de température jusqu'à une température normale, ladite partie fixe étant formée en fixant fermement lesdites fibres inorganiques les unes aux autres en interposant ladite matière inorganique dans ledit élément en nid d'abeilles, la fissure ayant une taille de plusieurs micromètres à des centaines de micromètres.

2. Procédé pour fabriquer un corps structuré en nid d'abeilles selon la revendication 1,
dans lequel
ladite matière inorganique contient de la silice.

3. Procédé pour fabriquer un corps structuré en nid d'abeilles selon la revendication 1 ou 2,
dans lequel
ladite fibre inorganique est au moins une sélectionnée à partir du groupe constitué d'une fibre de carbure de silicium, d'une fibre d'alumine, d'une fibre de basalte, d'une fibre de silice, d'une fibre de silice-alumine, d'une fibre d'oxyde de titane et d'une fibre de zircone.

4. Procédé pour fabriquer un corps structuré en nid d'abeilles selon l'une quelconque des revendications 1 à 3,
dans lequel
ledit mélange est moulé d'un seul tenant par moulage par extrusion.

5. Procédé pour fabriquer un corps structuré en nid d'abeilles selon la revendication 4,
dans lequel
ledit moulage par extrusion est un moulage du type à piston.

6. Procédé pour fabriquer un corps structuré en nid d'abeilles selon l'une quelconque des revendications 1 à 3, comprenant en outre le laminage dudit élément en nid d'abeilles.

7. Corps structuré en nid d'abeilles produit selon un procédé tel que décrit dans l'une quelconque des revendications 1 à 6.
